# EUROPEAN PATENT SPECIFICATION

(11) **EP 1 872 525 B1**
(45) Date of publication and mention of the grant of the patent: **01.08.2012**
(21) Application number: 06721827.1
(22) Date of filing: 18.04.2006
(51) Int. Cl.: H04W 4/00

(54) **SYSTEM AND METHOD FOR DISCOVERING WIRELESS MOBILE APPLICATIONS**
SYSTEM UND VERFAHREN ZUM ENTDECKEN DRAHTLOSER MOBILER ANWENDUNGEN
SYSTEME ET PROCEDE DESTINES A DECOUVRIR DES APPLICATIONS MOBILES SANS FIL

(30) Priority: 18.04.2005 US 672044 P
(43) Date of publication of application: 02.01.2008
(73) Proprietor: Research In Motion Limited, Waterloo, ON N2L 3W8 (CA)
(72) Inventor: FRITSCH, Brindusa, Toronto, Ontario M9C 2J9 (CA); TAYLOR, Sean, Paul, Milton, Ontario L9T 6X3 (CA); SHENFIELD, Michael, Richmond Hill, Ontario L4C 3S9 (CA)
(74) Representative: Patel, Binesh
(86) International application number: PCT/CA2006/000581
(87) International publication number: WO 2006/111002

(56) References cited:
- EP-A- 1 333 650
- EP-A2- 1 333 650
- WO-A-02/093289
- WO-A-03/083676
- WO-A1-03/083676
- WO-A2-02/093289
- US-A1- 2003 182 364
- US-A1- 2004 215 700
- US-A1- 2005 097 087
- US-A1- 2005 220 139
- HEUSSER A ET AL: "Personal Service Areas for Mobile Web Applications" IEEE INTERNET COMPUTING, IEEE SERVICE CENTER, NEW YORK, NY, US, vol. 8, no. 6, 1 November 2004 (2004-11-01), pages 34-39, XP011121812 ISSN: 1089-7801

## Description

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

The present patent disclosure relates generally to a communication system for providing communication to a plurality of devices and specifically to a system and method for discovering wireless mobile applications on such devices.

### BACKGROUND

Due to the proliferation of wireless networks, there are a continually increasing number of wireless devices in use today. These devices, which can be referred to as thin clients due to their limited processing abilities, include mobile telephones, personal digital assistance (PDAs) with wireless communication capabilities, two-way pagers and the like. Concurrently with the increase of available wireless devices, software applications running on such devices have increased their utility. For example, the wireless device may include an application that retrieves a weather report for a list of desired cities or an application that allows a user to shop for groceries. These software applications take advantage of the ability to transmit data of the wireless network in order to provide timely and useful services to users, often in addition to voice communication. However, due to a plethora of different types of devices, restricted resources of some devices, and complexity of delivering large amounts of data to the devices, developing software applications remains a difficult and time-consuming task.

Currently, devices are configured to communicate with Web services through Internet-based browsers and/or native applications. Browsers have the advantage of being adaptable to operate on a cross-platform basis for a variety of different devices, but have a disadvantage of requesting pages (screen definitions in hyper-text markup language (HTML)) from the Web service, which hinders the persistence of data contained in the screens. A further disadvantage of browsers is that the screens are rendered at runtime, which can be resource intensive. Applications for browsers are efficient tools for designing platform independent applications. Accordingly, different runtime environments, regardless of the platform, execute the same application. However, since difference wireless devices have different capabilities and form factors, the application may not be executed or displayed as desired. Further, browser-based applications often require significant transfer bandwidth to operate efficiently, which may be costly or even unavailable for some wireless devices.

Universal Description, Discovery and Integration (UDDI) is a group of specifications that allow providers to publish information about their Web services and allow Web service requesters to inquire about that information to find a Web service and to be able to run the Web service. Technically, UDDI consists of an XML schema that defines four core data structures - Business, Service, Binding and Programmatic interface - and a set of APIs that operate on those structures. The architecture of UDDI allows for public and private registries. Private registries are aimed for companies offering services to trusted business associates and vendors using the services. Public registries for those offering services that are to be offered publicly in either a licensing or shareware manner. UDDI registries provide a key advantage over standard software release management practices. As new or updated versions of a Web service are released, a UDDI registry allows the service to be put to use immediately by the requesting application without any recoding or reintegration work.

Wireless Mobile Applications (WMAs) follow a similar paradigm. Typically, WMAs offer describable services available either publicly or privately. WMAs require a simple language agnostic protocol under which to operate using publish and inquiry methods.

PCT Publication WO02/093289 by Nykänen describes a method of discovering businesses and services by accessing UDDI registry by forming of a query to the UDDI registry for the wireless device user. WO02/093289 maintains a personal user profile of the user UDDI searching strategies and Internet accessing preferences. The user profile can be used as a shortcut for online or offline queries to the UDDI registry or for accessing pages from web sites, in response to the user's entry of abbreviated inputs to the wireless device.

PCT Publication WO03/083676 by Kramer teaches reception of a service access point (SAP) from a web service directory, for example, a UDDI registry. The SAP is associated with a first application and identifies a web server. In WO03/083676, address information associated with the first application from the web server identified by the SAP is retrieved and a second application is launched. The second application then establishes a communication channel with an application server identified by the retrieved address information.

European paten application EP 1 333 650 by Salmenkatia et al., recommends to a user a subset of services from available services to the user in which each recommended service of the subset has a voice short-cut. EP 1 333 650 then selects a service to be accessed according to a voice command by the user corresponding to the voice short-cut of the service.

A publication by Heusser et al., "Personal Service Areas for Mobile Web Applications" in IEEE Internet Computing, IEEE Service Center, New York, NY, vol. 8(6) November 1, 2004 pp. 34-39, describes mobile services that let the users access Web-based information about resources in their immediate vicinities, in the form of a context aware tourist information system (CATIS). In Heusser et al., UDDI is used to provide a centralized registry of tourist information service, and Web services is used to deliver tourism content.

There is a need for a way of discovering wireless mobile-based applications on devices to obviate or mitigate at least some of the aforementioned disadvantages.

### SUMMARY

The present patent disclosure provides for discovering wireless mobile applications for wireless device mobile services.

In accordance with an aspect of the present patent disclosure there is provided a system for providing client applications, as recited in claim 1.

In accordance with another aspect of the present patent disclosure there is provided a method of providing thin client applications, as recited in claim 11.

In accordance with another aspect of the present patent disclosure there is provided a method of obtaining a thin client application, as recited in claim 14.

In accordance with another aspect of the present patent disclosure there is provided a system for discovering thin client applications, as recited in claim 3.

In accordance with another aspect of the present patent disclosure there is provided a method of discovering thin client applications, as recited in claim 16.

In accordance with another aspect of the present patent disclosure there is provided a computer-readable medium, as recited in claim 19.

In accordance with another aspect of the present patent disclosure there is provided a propagated signal carrier, as recited in claim 20.

In accordance with another aspect of the present patent disclosure there is provided a computer-readable medium, as recited in claim 21.

In accordance with another aspect of the present patent disclosure there is provided a propagated signal carrier, as recited in claim 22.

### BRIEF DESCRIPTION OF THE DRAWINGS

An embodiment of the patent disclosure will now be described by way of example only with reference to the following drawings in which:
Figure 1 shows in a schematic diagram an example of a network facilitating wireless mobile applications;
Figure 2 shows in a detailed component diagram an example of the application gateway shown in figure 1;
Figure 3 shows in a flow diagram an example of a wireless mobile application communication model;
Figure 4 shows in a sequence diagram an example of a communication sequence for the wireless mobile application communication model of Figure 3;
Figure 5 shows in an interface diagram the discovery server of Figure 2 in greater detail for discovering wireless mobile applications;
Figures 6a, 6b, and 6c show in component diagrams examples of UDDI structures for use in embodiments of the present patent disclosure;
Figure 7 shows in a template record an example of a UDDI registry in accordance with an embodiment of the present patent disclosure;
Figure 8 shows in a flow diagram of the network of Figure 1 using the UDDI registry of Figure 7;
Figure 9 shows in a component diagram an example of a client application matching system, in accordance with an embodiment of the present patent disclosure;
Figure 10 shows in a flowchart an example of a method of providing client applications that match thin implementations for a web service, in accordance with an embodiment of the client application matching system; and
Figure 11 shows in a flowchart an example of a method of obtaining client applications that match thin implementations for a web service, in accordance with an embodiment of the client application discovery system.

### DETAILED DESCRIPTION OF THE PREFERRED EMBODIMENT

The present patent disclosure provides for discovering wireless mobile applications for wireless device mobile services.

The goal of the UDDI specification is to enable publication and discovery of Web services exclusively. Other types of applications that can be described, published, discovered and widely made available to users (e.g., mobile applications) can be stored in a UDDI registry.

Accordingly, UDDI is used in a unique way when native Web service entries are enhanced to point to known thin client implementations (e.g., a wireless application or a website). The description of one or more thin client implementations may reside on the same UDDI registry as the native Web service or another UDDI registry or the application location can be described solely using a URL (e.g., a website).

Conveniently, a specific terminal may request a matching application for the Web service back-end.

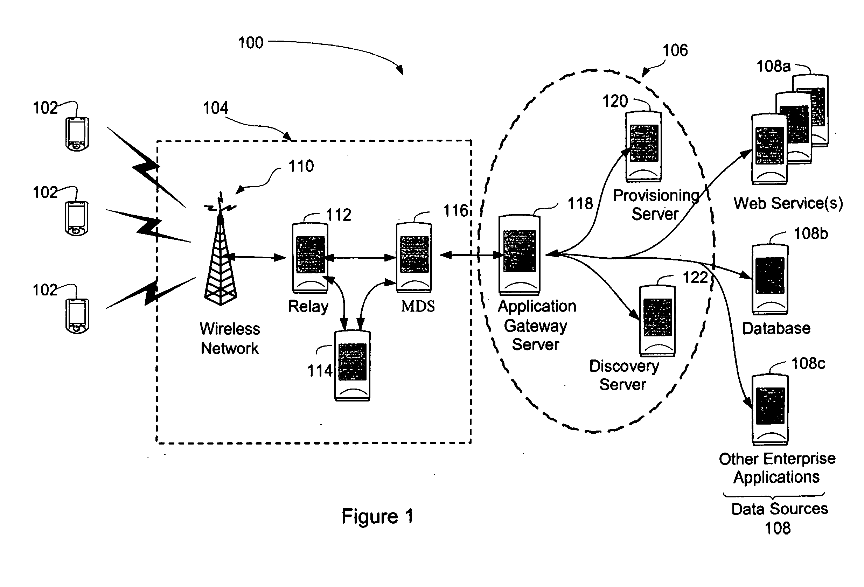

For convenience, like numerals in the description refer to like structures in the drawings. Referring to Figure 1, a communication infrastructure is illustrated generally by numeral 100. The communication infrastructure 100 comprises a plurality of wireless devices 102, a communication network 104, an application gateway 106, and a plurality of back-end services 108.

The wireless devices 102 are typically personal digital assistants (PDAs), such as a BlackBerry^{™} by Research in Motion for example, but may include other devices. Each of the wireless devices 102 includes a runtime environment (RE) capable of hosting a plurality of component applications.

Component applications comprise one or more data components, presentation components, and/or message components, which are written in a structured definition language such as Extensible Markup Language (XML). The component applications can further comprise workflow components which contain a series of instructions such as written in a subset of ECMAScript, and can be embedded in the XML code in some implementations. Therefore, since the applications are compartmentalized, a common application can be written for multiple devices by providing corresponding presentation components without having to rewrite the other components. Further, large portions of the responsibility of typical applications are transferred to the runtime environment for the component application. The details of the component applications are described at the end of this description.

The wireless devices 102 are in communication with the application gateway 106 via the communication network 104. Accordingly, the communication network 104 may include several components such as a wireless network 110, a relay 112, a corporate server 114 and/or a mobile data server 116 for relaying data between the wireless devices 102 and the application gateway 106.

The application gateway 106 comprises a gateway server 118 a provisioning server 120 and a discovery server 122. The gateway server 118 acts as a message broker between the runtime environment on the wireless devices 102 and the back-end services 108. The gateway server 118 is in communication with both the provisioning server 120 and the discovery server 122. The gateway server 118 is further in communication with a plurality of the back-end servers 108, such as Web services 108a, database services 108b, as well as other enterprise services 108c, via a suitable link. For example, the gateway server 118 is connected with the Web services 108a and database services 108b via Simple Object Access Protocol (SOAP) and Java Database Connectivity (JDBC) respectively. Other types of back-end services 108 and their corresponding links will be apparent to a person of ordinary skill in the art.

Each wireless device 102 is initially provisioned with a service book establishing various protocols and settings, including connectivity information for the corporate server 114 and/or the mobile data server 116. These parameters may include a Uniform Resource Locator (URL) for the application gateway server 118 as well as its encryption key. Alternatively, if the wireless device 102 is not initially provisioned with the URL and encryption key, they may be pushed to the wireless device 102 via the mobile data server 116. The mobile device 102 can then connect with the application gateway 106 via the URL of the application gateway server 118.

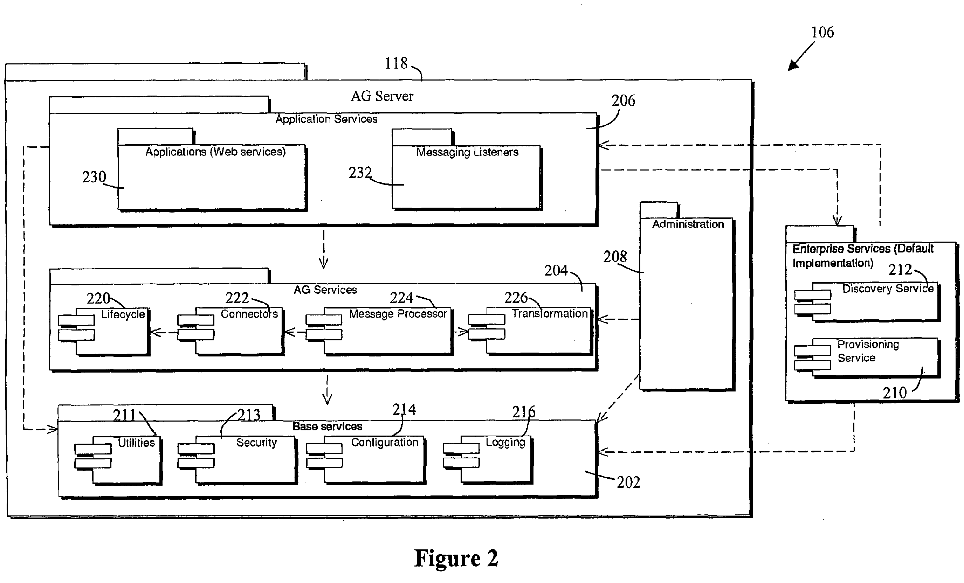

Referring to Figure 2, a more detailed view of the application gateway 106 is shown. The application gateway server 118 includes three layers of service: a base services layer 202, an application gateway services layer 204 and an application services layer 206. The application gateway server 118 further includes an administration service 208.

A provisioning service 210 and a discovery service 212 are provided by the provisioning server 120 and discovery server 120, respectively.

At the lowest level, the base services layer 202 offers basic, domain-independent system services to other components in higher levels. Thus, for example, all subsystems in the application gateway services layer 204 and the application services layer 206 can utilize and collaborate with the subsystems in the base services layer 202. In the present embodiment, the base services layer 202 includes a utilities subsystem 211, a security subsystem 213, a configuration subsystem 214, and a logging subsystem 216.

The application gateway services layer 204 provides wireless component application domain-specific services. These services provide efficient message transformation and delivery to back-end services 108 and provide wireless device 102 and component application lifecycle management. In the present embodiment, the application gateway services layer 204 includes a lifecycle subsystem 220, a connector subsystem 222, a messaging subsystem 224, and a transformation subsystem 226.

The application services layer 206 sits at the top of the architecture and provides external program interfaces and user interfaces using subsystems provided by the lower layers. For example, various applications such as a service provider lifecycle application, a packaging application and a message listening application provide external program interfaces since they communicate primarily with applications on external systems. Similarly, an administration application provides a user interface by providing a user with ability to access and potentially modify application gateway data and/or parameters.

The administration service 208 is responsible for administrative system messages, administration of the wireless devices 102, runtime administration of the application gateway subsystems, support and display system diagnostics, and administration of default implementations of the provisioning and discovery services.

The messaging listening application provides an interface for receiving messages from the wireless devices 102 as well as external sources and forwarding them to the messaging subsystem. Further, the message listening application typically authenticates that the source of the message is valid.

The security subsystem 212 providing services used by other subsystems for securing communications with the wireless device 102. In order to facilitate secure communications, the security subsystem 212 encrypts and decrypts messages, validates signatures and signs messages.

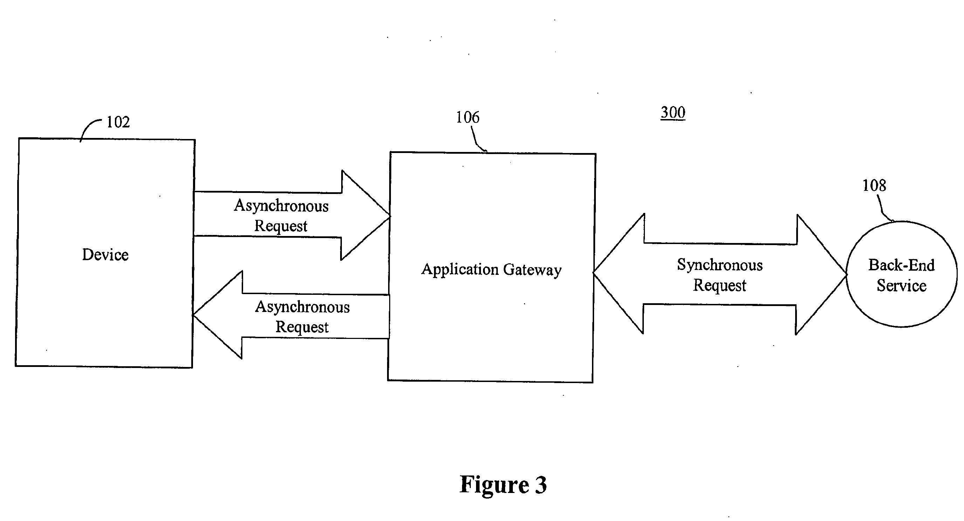

Referring to Figure 3 there is illustrated in a block diagram a wireless component application communication model. From a high-level perspective, the overall wireless component application infrastructure 300 includes a wireless component application runtime environment (Device RE) running on the device 102 and a wireless component application gateway (AG) 106 running on the server 118.

The AG 106 serves as a mediator between a wireless component application (sometimes referred to as application in this disclosure) executed by the RE and one or more back-end services 108 with which the application communicates. Often the back-end service is expected to be a Web service 108a using SOAP over HTTP or HTTPS as the transport protocol. As Web services are the most commonly expected back-end service 108, the term Web service is used interchangeable with back-end service 108 throughout this disclosure. However, it is appreciated that other types of back-end services can also be adapted to the disclosure. Figure 3 exemplifies a synchronous link with a back-end service 108. However, it should be appreciated that the AG 106 can be in communication with back-end services 108 over asynchronous links.

The wireless component application communication model 300 is based upon an asynchronous messaging paradigm. In this model the application gateway (AG) 106 establishes and mediates the connection between the device 102 and the back-end service(s) 108 to:
1. Achieve greater flexibility in resource management.
2. Provide reliable communication link between the device 102 and the back-end service 108 to handle situations when wireless coverage is unstable.
3. Efficiently distribute workload between the device RE 102 and the AG 106.

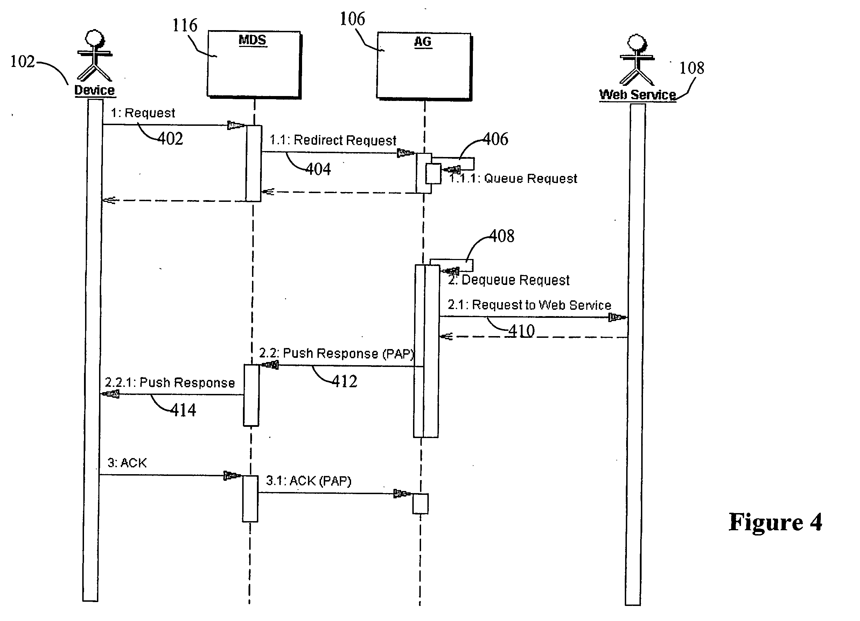

Referring to Figure 4 there is illustrated in a sequence diagram a communication sequence for the wireless component application communication model of Figure 3. The diagram describes the communications sequence between the device 102 and the back-end service(s) 108:
- Upon receiving a request 402 from the device 102, via 404 MDS 116, AG 106 queues the request 406 and releases the connection to the device.
- Next, the request is retrieved from the queue 408, pre-processed and forwarded 410 to the Web service 108a through a synchronous communication channel.
- Any response from the previous request is processed by the AG 106 and a response message is sent asynchronously 412 and 414 back to the device.

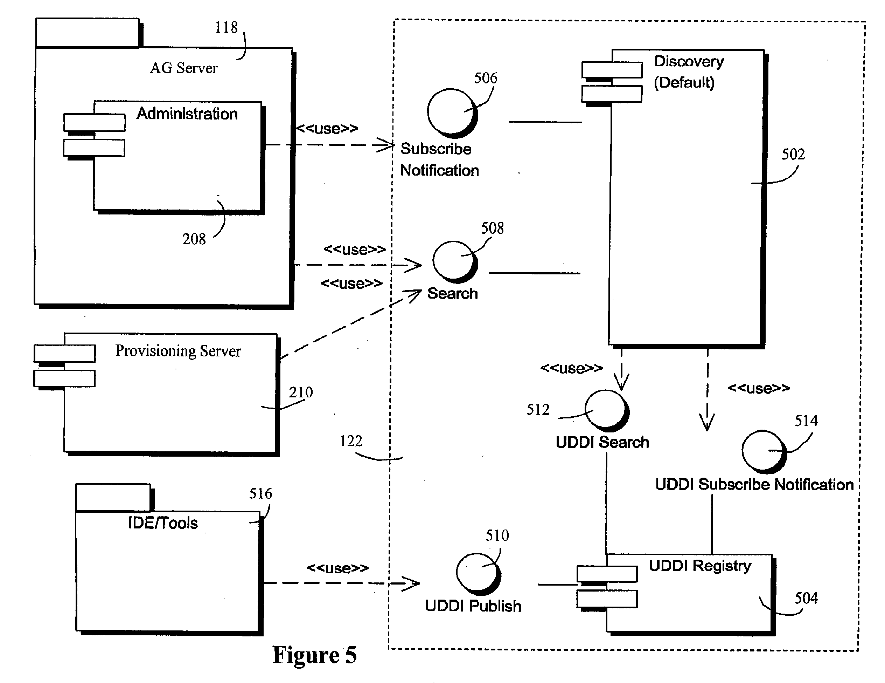

Referring to Figure 5 is a block diagram of a discovery server of Figure 2 shown in greater detail for discovering component applications, in accordance with an embodiment of the present patent disclosure. The discovery service 502 can be configured to be in communication with a plurality of registries that implement the UDDI specification.

Referring to Figure 5, the discovery server 122 is shown in greater detail. The discover server 122 comprises a discovery service 502 and a Universal Description, Discovery and Integration (UDDI) registry 504. The discovery service 502 communicates with the UDDI registry 504 via a UDDI search interface 512 and a UDDI subscription notification interface 514. The discovery service 502 further communicates with the administration subsystem server 208 via a subscription notification interface 506, and with both the application gateway server 118 and the provisioning server 120 via a search interface 508. The UDDI registry 504 is in communication with an integrated development enterprise (IDE) 516 via a UDDI publish interface 510.

The UDDI publish interface 510 is a SOAP-based UDDI interface providing publishing capabilities. This interface is used by any utility that facilitates component application publishing. Accordingly, once a developer has created a component application, it can be submitted to the UDDI registry 504 by following a set of component application publication rules.

The discovery service 502 can request a notification of new or updated component applications registered with the UDDI registry 504. The UDDI subscription notification interface 514 is a SOAP-based UDDI interface provided by UDDI registry to subscribe for Registry notifications. Preferably, the support for notification is based on the UDDI v3.0 specification.

The UDDI search interface 512 provides a SOAP-based UDDI interface for searching the UDDI registry.

The default implementation of the discovery service 502 is a standalone Web service deployed as part of the application gateway 106 via the discovery server 122. The discovery service 502 offers local component application discovery services to a discovery component application on the runtime environment on the wireless devices 102. From the perspective of the application gateway server 118, the discovery service 502 is a typical component application, and is deployed and managed as such. Accordingly, processing of discovery messages is generic and transparent to the application gateway server. Thus, the application gateway server 118 serves as a message broker between the runtime environment and the discovery service 502.

Typically, the runtime environment communicates with the discovery service 502 through the search interface 508. The current search interface 508 may be replaced with another one, as long as both the discovery component application on the wireless device and the discovery service 502 support the replacement search interface.

Yet further, the default implementation of the discovery service 502 may be used to enforce the secure wireless component provisioning policy. The security is achieved since the discovery service 502 accesses only predefined local or trusted UDDI registries.

Similarly to the UDDI subscription notification interface 514, the subscription notification interface 506 is a SOAP-based interface implemented by the discovery service provider 122. The subscription notification interface 506 allows the administration subsystem 208 to subscribe for discovery notifications. Such notifications include, for example, 'new component application version is available' and 'new component application is available'.

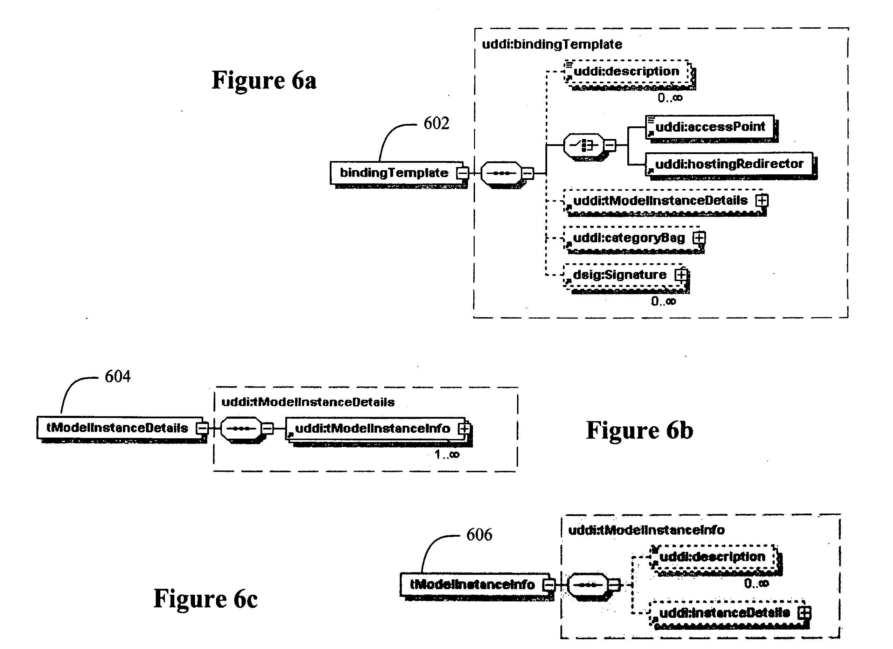

Referring to Figure 6a, 6b, and 6c there are illustrated in block diagrams UDDI structures for use in embodiments of the present patent disclosure. The Web service or any other entity published in the UDDI registry is stored as a binding template record 602 as shown in Figure 6a and the binding template key uniquely identifies the binding template record 602. The original Web service binding template record 602, as well as thin client applications that refer to the binding template record 602 are enhanced at publishing with additional parameters (tModels) to facilitate the specialized query.

An example of the operation that registers a Web service or other application in the UDDI registry is provided:

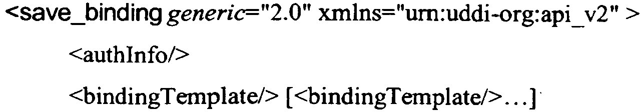

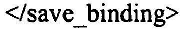

The binding template structure 602 is shown in Figure 6a. The tModellnstanceDetails 604 as shown in Figure 6b for the Web service record/application contains a list of technical models (tModels) that characterizes this record. The tModels that enhance the Web service at publishing time are a set of the following (name, value) pairs for each thin client application that the Web service supports. For example:
'uddi:standards.com:categorization: terminal:vendor' = 'Company Inc'
'uddi:standards.com:categorization: terminal:type' = 'Wireless Gadget'
'uddi:standards.com:categorization: terminal:version' = '1.0'
'uddi:standards.com:categorization: terminal:URL' = `http://www.comp.com/UDDI'
'uddi:standards.com:categorization:terminal:appBindingTemplateKey' = `2001' (optional; the application may not be located in a UDDI)

The tModels that enhance the thin client application at publishing time are one set of (name, value) pairs of the form:
'uddi:standards.com:categorization: terminal:vendor' = 'Company Inc'
'uddi:standards.com:categorization: terminal:type' = 'Wireless Gadget'
'uddi:standards.com:categorization: terminal:version' = '1.0'
'uddi:standards.com:categorization: terminal:URL' = `http://www.comp.com/UDDI'
Note: The 'terminal' tModels names are registered with the UDDI registry prior to any application using them, and are published by using the save_tModel operation of UDDI:

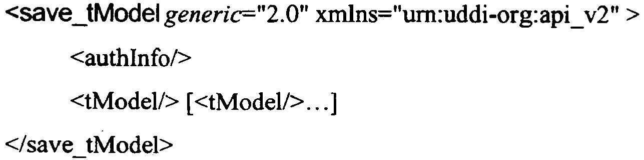

Figure 6c illustrates the tModel instance info structure 606. An example of a UDDI inquiry operation is:

```
          <find_binding serviceKey="uuid_key" [maxRows="nn"] generic="2.0"
                 xmlns="urn:uddi-org:api_v2" >
                 [<findQualifiers/>]
                 <tModelBag/>
          </find_binding>
```

In order to specialize the query for searching only Web services that match the terminal from which the query is made, the discovery application on the terminal should specify the list oftModels that describes the terminal. For example:
'uddi:standards.com:categorization: terminal:vendor' ='Company Inc'
`uddiatandards.com:categorization: terminal:type' = 'Wireless Gadget'
'uddi:standards.com:categorization: terminal:version' = '1.0'

The query operation returns only those bindingTemplate records that have been registered with tModels that match the tModelBag search criteria.

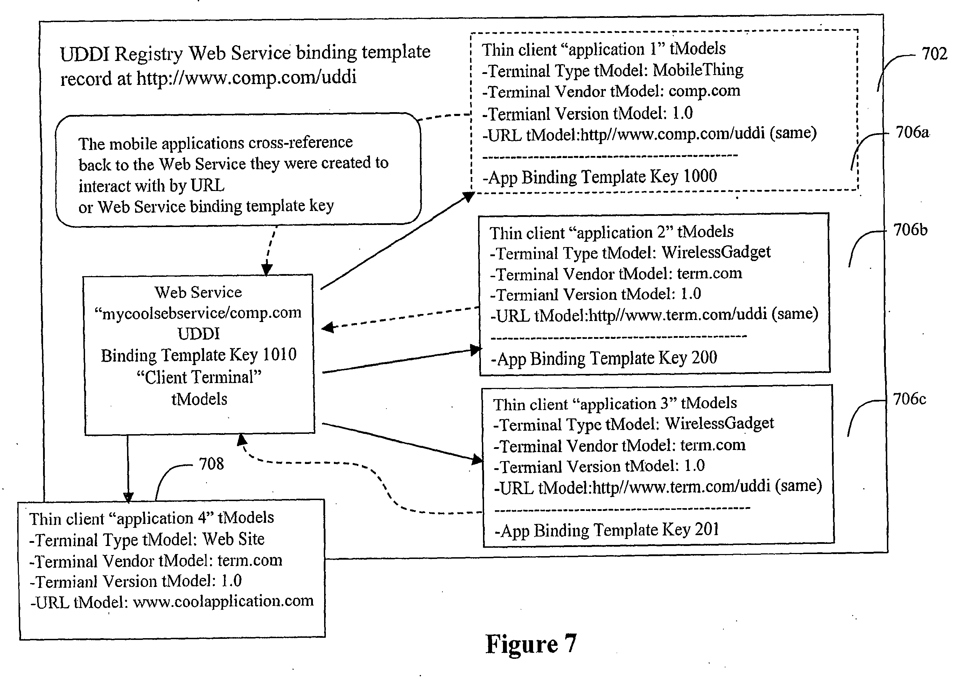

Referring to Figure 7 there is illustrated in a block diagram of a UDDI registry illustrating how a Web services binding template of Figures 6a is used to refer to thin client applications in accordance with an embodiment of the present patent disclosure. Figure 7 shows an example of binding template 702 named: UDDI Registry Web service binding template record at http://www.comp.com/uddi. For a Web service:
Web service
"mycoolsebservice/comp.com
UDDI
Binding Template Key 1010
"Client Terminal"
tModels

The mobile applications 706 cross-reference back to the Web service they were created to interact with by URL or Web service binding template key. The following are examples:

| mobile application 706a: | |
|---|---|
| | Thin client "application 1" tModels |
| | Terminal Type tModel: MobileThing |
| | Terminal Vendor tModel: comp.com |
| | Termianl Version tModel: 1.0 |
| | -URL tModel:http//www.comp.com/uddi (same) |
| | ----------------------------------------------------------- |

| | App Binding Template Key 1000 |
|---|---|
| mobile application 706b: | |
| | Thin client "application 2" tModels |
| | Terminal Type tModel: WirelessGadget |
| | Terminal Vendor tModel: term.com |
| | Termianl Version tModel: 1.0 |
| | -URL tModel:http//www.tenn.comluddi (same) |
| | ----------------------------------------------------------- |
| | App Binding Template Key 200 |

| mobile application 706c: | |
|---|---|
| | Thin client "application 3" tModels |
| | Terminal Type tModel: WirelessGadget |
| | Terminal Vendor tModel: term.com |
| | Termianl Version tModel: 1.0 |
| | -URL tModel:http//www.term.com/uddi (same) |
| | -------------------------------------------------------------- |
| | App Binding Template Key 201 |

In Figure 7 a mobile application 708 is shown that does not reside in the UDDI registry.

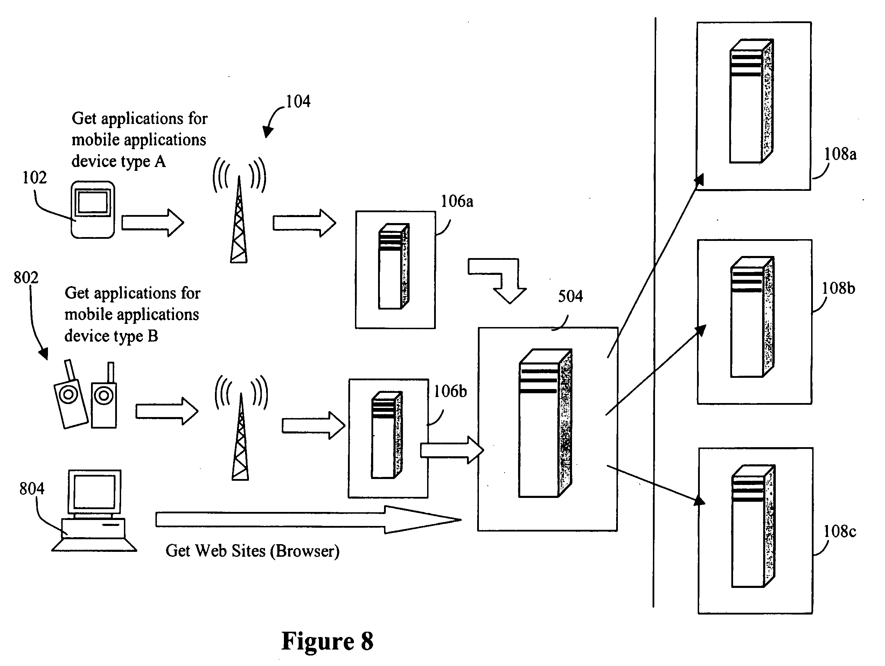

Referring to Figure 8 there is illustrated in a block diagram the network of Figure 1 using the UDDI registry of Figure 7. The system depicts how various terminals inquire the UDDI registry for Web services containing thin applications that match their specification. A wireless device 102 requests applications for device type A and Wireless devices 802 requests applications for device type B via wireless network 104. By contrast a computer 804 requests websites via its browser. All three requests reach the UDDI registry 504. The first two via the wireless network 104 and proxy servers 106a and 106b, respectively. The UDDI registry 504 includes binding templates as illustrated in Figure 7, hence is able to match various terminals with Web services using the appropriate thin clients contained therein.

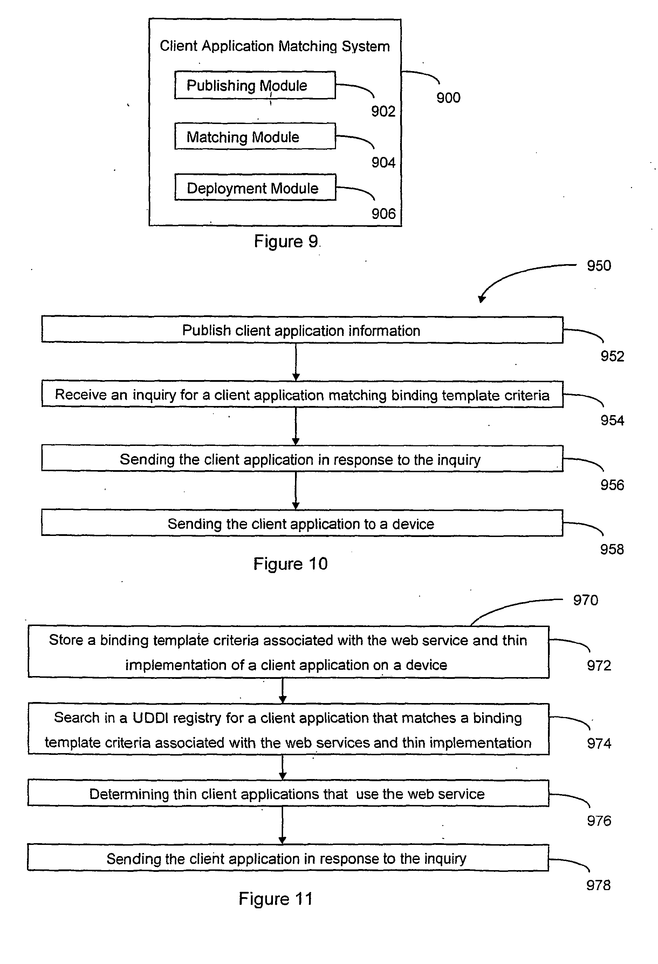

Figure 9 shows in a component diagram an example of a client application matching system 900 for providing and obtaining client applications that match a thin client implementation, in accordance with an embodiment of the present patent disclosure. The client application matching system 900 comprises a publishing module 902 for publishing a client application to a discovery service 502 acting as a wrapper to the UDDI registry 504, a matching module 904 for searching the UDDI registry for client applications that match a thin client implementation by calling an inquiry on the discovery service 502 and a deployment module 906 for retrieving from a back-end service, and transferring to a client, a client application in response to the inquiry.

Figure 10 shows in a flowchart an example of a method of providing client applications that match thin implementations for a web service (950), in accordance with an embodiment of the client application discovery system 900. The method (950) begins with publishing client application information to a discovery service (9.52). The client application information includes binding template records, binding template keys, additional parameters. Next an inquiry for a client application matching binding template criteria is received from the discovery service (954). In response to the inquiry, the client application is sent to the discovery service (956). The client application is then sent to the device (958).

Figure 11 shows in a flowchart an example of a method of obtaining client applications that match thin implementations for a web service (970), in accordance with an embodiment of the client application discovery system 900. The method begins with storing on a device a binding template criteria associated with a thin implementation of a client application (972). A search in a UDDI registry for a client application that matches binding template criteria associated with the thin implementations for web services is performed (974). The client application is received (976) by the discovery service and sent to the device (978).

The client application matching system 900 and methods according to the present patent disclosure may be implemented by any hardware, software or a combination of hardware and software having the above described functions. The software code, either in its entirety or a part thereof, may be stored in a computer readable memory. Further, a computer data signal representing the software code which may be embedded in a carrier wave may be transmitted via a communication network. Such a computer readable memory and a computer data signal are also within the scope of the present patent disclosure, as well as the hardware, software and the combination thereof.

While particular embodiments of the present patent disclosure have been shown and described, changes and modifications may be made to such embodiments without departing from the true scope of the patent disclosure.

## Claims

1. A system (900) for providing client applications that use Web services (108a), the system comprising:
a publishing module (902) for publishing a thin client application information to a discovery service (502) acting as a wrapper to a UDDI registry (504);
a matching module (904) for searching the UDDI registry for a thin client application referred by a Web service by calling an inquiry on the UDDI registry (504), the thin client application comprising a data component, a presentation component, and a message component; and
a deployment module (906) for retrieving from a back-end service (108), and transferring to a client, the thin client application in response to the inquiry.

2. The system as claimed in claim 1, wherein the thin client application information is published to the discovery service (502) includes a binding template record (602), the binding template record uniquely identified by a binding template key.

3. A system for discovering thin client applications for a mobile device (102) comprising:
a discovery server (122) including a registry (504), a discovery service (502) and a search interface (S12) for searching for Web services available to the mobile device (102), the registry (504) including storage for thin client application information for matching Web services with various thin client applications for the mobile device (102), the discovery service (502) communicating with the registry via the search interface (512), the thin client applications comprising a data component, a presentation component, and a message component; and
an application gateway server (118) for communicating with the mobile device (102), the application gateway server (118) configured for communication with a back-end service (108) and the discovery service of the discovery server (122) and returning to the mobile device (102) a list of thin client applications available for the mobile device (102).

4. The system of claim 3, wherein the thin client application information is a web service binding template (602).

5. The system of claim 3, wherein the registry (504) is UDDI registry.

6. The system of claim 4, wherein a technical model (tModel) enhances at least one of the Web service binding template, the thin client application and the Web services.

7. The system of claim 6, wherein the tModel includes at least name value pairs for: vendor; type; version; and URL

8. The system of claim 3, further comprising:
a matching module (904) for searching the registry by calling an inquiry; and
a deployment module (906) for retrieving from a back-end service (108), and transferring to a client, a client application in response to the inquiry.

9. The system of claim 3, wherein the mobile device (102) executes a computer browser.

10. The system of claim 3, wherein the mobile device (102) is a cell phone.

11. A method of providing thin client applications that use Web services (108a), the method comprising:
publishing a thin client application information to a discovery service (502);
searching for a Web service;
matching the Web service to a thin client application that uses the Web service based on thin client application information published to the discovery service (502), the thin client application comprising a data component, a presentation component, and a message component; and
sending the thin client application to a wireless device.

12. The method as claimed in claim 11, further comprising sending the thin client application via a discovery service (502).

13. The method as claimed in claim 11, wherein the thin client application information includes binding template record (602); the binding template record uniquely identified by a binding template key.

14. A method of obtaining a thin client application that uses a Web service (108a), the method comprising:
searching in a UDDI registry (504) for the Web service;
determining the thin client application that uses the Web service based on binding template criteria associated with the Web service, the thin client application comprising a data component, a presentation component, and a message component; and
sending to a mobile device (102) the thin client application that uses the Web service.

15. The method as claimed in claim 14, wherein the thin client application is received by the mobile device (102) via a discovery service (502).

16. A method of discovering thin client applications for a wireless device (102), the method comprising:
publishing thin client applications for connecting various wireless devices (102) to Web services, the thin client applications comprising a data component, a presentation component, and a message component;
searching for Web services available to the wireless device (102);
determining the thin client applications from the Web services available to the wireless device (102); and
returning to the wireless device a list of thin client applications available for the wireless device.

17. The method of claim 16, wherein the wireless device (102) executes a computer browser.

18. The method of claim 16, wherein the wireless device (102) is a cell phone.

19. A computer-readable medium storing instructions or statements for execution in a computer a method of providing thin client applications that use Web services (108a), the method comprising:
publishing a thin client application information to a discovery service (502);
searching for a Web service;
matching the Web service to a thin client application that uses the Web service based on thin client application information published to the discovery service (502), the thin client application comprising a data component, a presentation component, and a message component; and
sending the thin client application to the device.

20. A propagated signal carrier carrying signals containing computer-executable instructions that can be read and executed by a computer, the computer-executable instructions being used to execute a method of providing thin client applications that use Web service (108a), the method comprising:
publishing a thin client application information to a discovery service (502);
searching for a Web service;
matching the Web service to a thin client application that uses the Web service based on thin client application information published to the discovery service (502), the thin client application comprising a data component, a presentation component, and a message component; and
sending the thin client application to the device.

21. A computer-readable medium storing instructions or statements for execution in a computer of a method of obtaining a thin client application that uses a Web service (108a), the method comprising:
searching in a UDDI registry (504) for the Web service;
determining the thin client application that uses the Web service based on binding template criteria associated with the Web service, the thin client application comprising a data component, a presentation component, and a message component; and
sending to a mobile device (102) the thin client application that uses the Web service.

22. A propagated signal carrier carrying signals containing computer-executable instructions that can be read and executed by a computer, the computer-executable instructions being used to execute a method of obtaining a thin client application that uses a Web service (108a), the method comprising:
searching in a UDDI registry for the Web service;
determining the thin client application that uses the Web service based on binding template criteria associated with the Web service, the thin client application comprising a data component, a presentation component, and a message component; and
sending to a mobile device (102) the thin client application that uses the Web service.

## Patentansprüche

1. Ein System (900) zum Vorsehen von Client-Anwendungen, die Web-Dienste (108a) verwenden, wobei das System aufweist:
ein Veröffentlichungsmodul (902) zum Veröffentlichen einer "Thin Client"-Anwendung-Information an einen Auffindungsdienst (502), der als eine Hülle für ein UDDI-Register (504) wirkt;
ein Zuordnungs-Modul (904) zum Durchsuchen des UDDI-Registers nach einer "Thin Client"-Anwendung, verwiesen durch einen Web-Dienst, durch Aufrufen einer Abfrage des UDDI-Registers (504), wobei die "Thin Client"-Anwendung eine Datenkomponente, eine Präsentationskomponente und
eine Nachrichtenkomponente aufweist; und
ein Einsetzen-Modul (906) zum Abrufen der "Thin Client"-Anwendung von einem Backend-Dienst (108) und Übertragen an einen Client in Reaktion auf die Abfrage.

2. Das System gemäß Anspruch 1, wobei die "Thin Client"-Anwendung-Information, die an den Auffindungsdienst (502) veröffentlicht wird, einen Binde-Vorlage-Datensatz (602) umfasst, wobei der Binde-Vorlage-Datensatz eindeutig durch einen Binde-Vorlage-Schlüssel identifiziert wird.

3. Ein System zum Auffinden von "Thin Client"-Anwendungen für eine mobile Vorrichtung (102), das aufweist:
einen Auffindungs-Server (122), der ein Register (504), einen Auffindungsdienst (502) und eine Suchschnittstelle (512) umfasst zum Suchen nach Web-Diensten, die für die mobile Vorrichtung (102) verfügbar sind, wobei das Register (504) einen Speicher umfasst für eine "Thin Client"-Anwendung-Information zum Zuordnen von Web-Diensten zu verschiedenen "Thin Client"-Anwendungen für die mobile Vorrichtung (102), wobei der Auffindungsdienst (502) mit dem Register über die Suchschnittstelle (512) kommuniziert, wobei die "Thin Client"-Anwendungen eine Datenkomponente, eine Präsentationskomponente und
eine Nachrichtenkomponente aufweisen; und
einen Anwendungs-Gateway-Server (118) zum Kommunizieren mit der mobilen Vorrichtung (102), wobei der Anwendungs-Gateway-Server (118) konfiguriert ist zur Kommunikation mit einem Backend-Dienst (108) und
dem Auffindungsdienst des Auffindungs-Servers (122) und zum Zurückgeben an die mobile Vorrichtung (102) einer Liste von "Thin Client"-Anwendungen, die für die mobile Vorrichtung (102) verfügbar sind.

4. Das System gemäß Anspruch 3, wobei die "Thin Client"-Anwendung-Information eine Web-Dienst-Binde-Vorlage (602) ist.

5. Das System gemäß Anspruch 3, wobei das Register (504) ein UDDI-Register ist.

6. Das System gemäß Anspruch 4, wobei ein technisches Modell (tModel) zumindest eines der Web-Dienst-Binde-Vorlage, der "Thin Client"-Anwendung und der Web-Dienste verbessert.

7. Das System gemäß Anspruch 6, wobei das tModel zumindest Namen-Wert-Paare umfasstfür: Verkäufer; Typ; Version; und URL.

8. Das System gemäß Anspruch 3, das weiter aufweist:
ein Zuordnungs-Modul (904) zum Durchsuchen des Registers durch Aufrufen einer Abfrage; und
ein Einsetzen-Modul (906) zum Abrufen einer Client-Anwendung von einem Backend-Dienst (108) und Übertragen an einen Client in Reaktion auf die Abfrage.

9. Das System gemäß Anspruch 3, wobei die mobile Vorrichtung (102) einen Computer-Browser ausführt.

10. Das System gemäß Anspruch 3, wobei die mobile Vorrichtung (102) ein zellulares Telefon ist.

11. Ein Verfahren zum Vorsehen von "Thin Client"-Anwendungen, die Web-Dienste (108a) verwenden, wobei das Verfahren aufweist:
Veröffentlichen einer "Thin Client"-Anwendung-Information an einen Auffindungsdienst (502);
Suchen nach einem Web-Dienst;
Zuordnen des Web-Diensts zu einer "Thin Client"-Anwendung, die den Web-Dienst verwendet, basierend auf einer "Thin Client"-Anwendung-Information, die an den Auffindungsdienst (502) veröffentlicht wird, wobei die "Thin Client"-Anwendung eine Datenkomponente, eine Präsentationskomponente und eine Nachrichtenkomponente aufweist; und
Senden der "Thin Client"-Anwendung an eine drahtlose Vorrichtung.

12. Das Verfahren gemäß Anspruch 11, das weiter aufweist ein Senden der "Thin Client"-Anwendung über einen Auffindungsdienst (502).

13. Das Verfahren gemäß Anspruch 11, wobei die "Thin Client"-Anwendung-Information einen Binde-Vorlage-Datensatz (602) umfasst; wobei der Binde-Vorlage-Datensatz eindeutig durch einen Binde-Vorlage-Schlüssel identifiziert wird.

14. Ein Verfahren zum Erlangen einer "Thin Client"-Anwendung, die einen Web-Dienst (108a) verwendet, wobei das Verfahren aufweist:
Durchsuchen eines UDDI-Registers (504) nach dem Web-Dienst;
Bestimmen der "Thin Client"-Anwendung, die den Web-Dienst verwendet,
basierend auf Binde-Vorlage-Kriterien, die mit dem Web-Dienst assoziiert sind, wobei die "Thin Client"-Anwendung eine Datenkomponente, eine Präsentationskomponente und eine Nachrichtenkomponente aufweist; und
Senden der "Thin Client"-Anwendung, die den Web-Dienst verwendet, an eine mobile Vorrichtung (102).

15. Das Verfahren gemäß Anspruch 14, wobei die "Thin Client"-Anwendung von der mobilen Vorrichtung (102) über einen Auffindungsdienst (502) empfangen wird.

16. Ein Verfahren zum Auffinden von "Thin Client"-Anwendungen für eine drahtlose Vorrichtung (102), wobei das Verfahren aufweist:
Veröffentlichen von "Thin Client"-Anwendungen zum Verbinden von verschiedenen drahtlosen Vorrichtungen (102) mit Web-Diensten, wobei die "Thin Client"-Anwendungen eine Datenkomponente, eine Präsentationskomponente und eine Nachrichtenkomponente aufweisen;
Suchen nach Web-Diensten, die für die drahtlose Vorrichtung (102) verfügbar sind;
Bestimmen der "Thin Client"-Anwendungen aus den Web-Diensten, die für die drahtlose Vorrichtung (102) verfügbar sind; und
Zurückgeben an die mobile Vorrichtung einer Liste von "Thin Client"-Anwendungen, die für die drahtlose Vorrichtung verfügbar sind.

17. Das Verfahren gemäß Anspruch 16, wobei die drahtlose Vorrichtung (102) einen Computer-Browser ausführt.

18. Das Verfahren gemäß Anspruch 16, wobei die mobile Vorrichtung (102) ein zellulares Telefon ist.

19. Computerlesbares Medium, das Anweisungen oder Aussagen zur Ausführung in einem Computer speichert für ein Verfahren zum Vorsehen von "Thin Client"-Anwendungen, die Web-Dienste (108a) verwenden, wobei das Verfahren aufweist:
Veröffentlichen einer "Thin Client"-Anwendung-Information an einen Auffindungsdienst (502);
Suchen nach einem Web-Dienst;
Zuordnen des Web-Diensts zu einer "Thin Client"-Anwendung, die den Web-Dienst verwendet, basierend auf einer "Thin Client"-Anwendung-Information, die an den Auffindungsdienst (502) veröffentlicht wird, wobei die "Thin Client"-Anwendung eine Datenkomponente, eine Präsentationskomponente und eine Nachrichtenkomponente aufweist; und
Senden der "Thin Client"-Anwendung an die Vorrichtung.

20. Verbreitungssignal-Träger, der Signale trägt, die computerausführbare Anweisungen enthalten, die von einem Computer gelesen und ausgeführt werden können, wobei die computerausführbaren Anweisungen verwendet werden zur Ausführung eines Verfahrens zum Vorsehen von "Thin Client"-Anwendungen, die Web-Dienste (108a) verwenden, wobei das Verfahren aufweist:
Veröffentlichen einer "Thin Client"-Anwendung-Information an einen Auffindungsdienst (502);
Suchen nach einem Web-Dienst;
Zuordnen des Web-Diensts zu einer "Thin Client"-Anwendung, die den Web-Dienst verwendet, basierend auf einer "Thin Client"-Anwendung-Information, die an den Auffindungsdienst (502) veröffentlicht wird, wobei die "Thin Client"-Anwendung eine Datenkomponente, eine Präsentationskomponente und eine Nachrichtenkomponente aufweist; und
Senden der "Thin Client"-Anwendung an die Vorrichtung.

21. Computerlesbares Medium, das Anweisungen oder Aussagen zur Ausführung in einem Computer speichert für ein Verfahren zum Erlangen einer "Thin Client"-Anwendung, die einen Web-Dienst (108a) verwendet, wobei das Verfahren aufweist:
Durchsuchen eines UDDI-Registers (504) nach dem Web-Dienst;
Bestimmen der "Thin Client"-Anwendung, die den Web-Dienst verwendet,
basierend auf Binde-Vorlage-Kriterien, die mit dem Web-Dienst assoziiert sind, wobei die "Thin Client"-Anwendung eine Datenkomponente, eine Präsentationskomponente und eine Nachrichtenkomponente aufweist; und
Senden der "Thin Client"-Anwendung, die den Web-Dienst verwendet, an eine mobile Vorrichtung (102).

22. Verbreitungssignal-Träger, der Signale trägt, die computerausführbare Anweisungen enthalten, die von einem Computer gelesen und ausgeführt werden können, wobei die computerausführbaren Anweisungen verwendet werden zur Ausführung eines Verfahrens zum Erlangen einer "Thin Client"-Anwendung, die einen Web-Dienst (108a) verwendet, wobei das Verfahren aufweist:
Durchsuchen eines UDDI-Registers nach dem Web-Dienst;
Bestimmen der "Thin Client"-Anwendung, die den Web-Dienst verwendet,
basierend auf Binde-Vorlage-Kriterien, die mit dem Web-Dienst assoziiert sind, wobei die "Thin Client"-Anwendung eine Datenkomponente, eine Präsentationskomponente und eine Nachrichtenkomponente aufweist; und
Senden der "Thin Client"-Anwendung, die den Web-Dienst verwendet, an eine mobile Vorrichtung (102).

## Revendications

1. Système (900) destiné à fournir des applications client qui utilisent des services Web (108a), le système comprenant :
un module de publication (902) pour publier des informations d'application client léger à un service de découverte (502) agissant comme une enveloppe par rapport à un registre UDDI (504) ;
un module d'appariement (904) pour la recherche du registre UDDI pour une application client léger désignée par un service Web en appelant une requête concernant le registre UDDI (504), l'application client léger comprenant une composante de données, une composante de présentation, et une composante de message ; et
un module de déploiement (906) pour extraire l'application client léger à partir d'un service dorsal (108), et la transférer à un client, en réponse à la requête.

2. Système tel que revendiqué dans la revendication 1, dans lequel les informations d'application client léger publiées au service de découverte (502) comprennent un enregistrement de modèle de liaison (602), l'enregistrement du modèle de liaison étant identifié de manière unique par une clé de modèle de liaison.

3. Système destiné à découvrir des applications client léger pour un dispositif mobile (102) comprenant :
un serveur de découverte (122) comprenant un registre (504), un service de découverte (502) et une interface de recherche (512) pour chercher des services Web disponibles pour le dispositif mobile (102), le registre (504) comprenant le stockage d'informations d'application client léger pour apparier des services Web à diverses applications client léger pour le dispositif mobile (102), le service de découverte (502) communiquant avec le registre via l'interface de recherche (512), les applications client léger comprenant une composante de données, une composante de présentation, et une composante de message ; et
un serveur passerelle d'application (118) pour communiquer avec le dispositif mobile (102), le serveur passerelle d'application (118) étant configuré pour communiquer avec un service dorsal (108) et le service de découverte du serveur de découverte (122) et pour renvoyer au dispositif mobile (102) une liste d'applications client léger qui lui sont disponibles.

4. Système de la revendication 3, dans lequel les informations d'application client léger consistent en un modèle de liaison (602) de service Web.

5. Système de la revendication 3, dans lequel le registre (504) est un registre UDDI.

6. Système de la revendication 4, dans lequel un modèle technique (tModel) améliore au moins l'un du modèle de liaison de service Web, de l'application client léger et des services Web.

7. Système de la revendication 6, dans lequel le tModel comprend au moins des paires nom-valeur pour : un fournisseur ; un type ; une version ; et une URL.

8. Système de la revendication 3, comprenant en outre :
un module d'appariement (904) pour la recherche du registre en appelant une requête ; et
un module de déploiement (906) pour extraire une application client à partir d'un service dorsal (108), et la transférer à un client, en réponse à la requête.

9. Système de la revendication 3, dans lequel le dispositif mobile (102) exécute un navigateur d'ordinateur.

10. Système de la revendication 3, dans lequel le dispositif mobile (102) est un téléphone cellulaire.

11. Procédé destiné à fournir des applications client léger qui utilisent des services Web (108a), le procédé comprenant le fait :
de publier des informations d'application client léger à un service de découverte (502) ;
de chercher un service Web ;
d'apparier le service Web à une application client léger qui utilise le service Web sur la base des informations d'application client léger publiées au service de découverte (502), l'application client léger comprenant une composante de données, une composante de présentation, et une composante de message ; et
d'envoyer l'application client léger à un dispositif sans fil.

12. Procédé tel que revendiqué dans la revendication 11, comprenant en outre l'envoi de l'application client léger via un service de découverte (502).

13. Procédé tel que revendiqué dans la revendication 11, dans lequel les informations d'application client léger comprennent un enregistrement de modèle de liaison (602) ; l'enregistrement de modèle de liaison étant identifié de manière unique par une clé de modèle de liaison.

14. Procédé d'obtention d'une application client léger qui utilise un service Web (108a), le procédé comprenant :
la recherche du service Web dans un registre UDDI (504) ;
la détermination de l'application client léger qui utilise le service Web sur la base de critères de modèle de liaison associés au service Web, l'application client léger comprenant une composante de données, une composante de présentation, et une composante de message ; et
l'envoi de l'application client léger qui utilise le service Web au dispositif mobile (102).

15. Procédé tel que revendiqué dans la revendication 14, dans lequel l'application client léger est reçue par le dispositif mobile (102) via un service de découverte (502).

16. Procédé de découverte d'applications client léger pour un dispositif sans fil (102), le procédé comprenant le fiait :
de publier des applications client léger pour connecter différents dispositifs sans fil (102) à des services Web, les applications client léger comprenant une composante de données, une composante de présentation, et une composante de message ;
de chercher des services Web disponibles pour le dispositif sans fil (102) ;
de déterminer les applications client léger à partir des services Web disponibles pour le dispositif sans fil (102) ; et
de renvoyer au dispositif sans fil une liste d'applications client léger qui lui sont disponibles.

17. Procédé de la revendication 16, dans lequel le dispositif sans fil (102) exécute un navigateur d'ordinateur.

18. Procédé de la revendication 16, dans lequel le dispositif sans fil (102) est un téléphone cellulaire.

19. Support lisible par ordinateur stockant des instructions ou déclarations pour exécuter dans un ordinateur un procédé destiné à fournir des applications client léger qui utilisent des services Web (108a), le procédé comprenant le fait :
de publier des informations d'application client léger à un service de découverte (502) ;
de chercher un service Web ;
d'apparier le service Web à une application client léger qui utilise le service Web sur la base d'informations d'application client léger publiées au service de découverte (502), l'application client léger comprenant une composante de données, une composante de présentation, et une composante de message ; et
d'envoyer l'application client léger au dispositif.

20. Support de signaux propagés portant des signaux contenant des instructions exécutables par ordinateur qui peuvent être lues et exécutées par un ordinateur, les instructions exécutables par ordinateur étant utilisées pour exécuter un procédé destiné à fournir des applications client léger qui utilisent un service Web (108a), le procédé comprenant le fait :
de publier des informations d'application client léger à un service de découverte (502) ;
de chercher un service Web ;
d'apparier le service Web à une application client léger qui utilise le service Web sur la base d'informations d'application client léger publiées au service de découverte (502), l'application client léger comprenant une composante de données, une composante de présentation, et une composante de message ; et
d'envoyer l'application client léger au dispositif.

21. Support lisible par ordinateur stockant des instructions ou déclarations pour exécuter dans un ordinateur un procédé d'obtention d'une application client léger qui utilise un service Web (108a), le procédé comprenant :
la recherche du service Web dans un registre UDDI (504) ;
la détermination de l'application client léger qui utilise le service Web sur la base de critères de modèle de liaison associés au service Web, l'application client léger comprenant une composante de données, une composante de présentation, et une composante de message ; et
l'envoi de l'application client léger qui utilise le service Web à un dispositif mobile (102).

22. Support de signaux propagés portant des signaux contenant des instructions exécutables par ordinateur qui peuvent être lues et exécutées par un ordinateur, les instructions exécutables par ordinateur étant utilisées pour exécuter un procédé d'obtention d'une application client léger qui utilise un service Web (108a), le procédé comprenant :
la recherche du service Web dans un registre UDDI ;
la détermination de l'application client léger qui utilise le service Web sur la base de critères de modèle de liaison associés au service Web, l'application client léger comprenant une composante de données, une composante de présentation, et une composante de message ; et
l'envoi de l'application client léger qui utilise le service Web à un dispositif mobile (102).
